# NEW EUROPEAN PATENT SPECIFICATION

(11) **EP 2 920 095 B2**
(45) Date of publication and mention of the opposition decision: **19.04.2023**
(45) Mention of the grant of the patent: 13.09.2017
(21) Application number: 13801823.9
(22) Date of filing: 11.11.2013
(51) Int. Cl.: B65G 47/86, B65B 25/00, B65B 11/56, B65B 11/30, B65B 35/58, B65B 51/00

(54) **WRAPPING MACHINE FOR CONFECTIONERY PRODUCTS**
EINWICKELMASCHINE FÜR SÜSSWAREN
MACHINE À ENVELOPPER DES PRODUITS DE CONFISERIE

(30) Priority: 16.11.2012 IT BO20120629
(43) Date of publication of application: 23.09.2015
(73) Proprietor: Azionaria Costruzioni Macchine Automatiche A.C.M.A. S.p.A., 40131 Bologna (IT)
(72) Inventor: CIVOLANI, Daniele, 40062 Molinella (IT); CARRARA, Marco, 40050 Stiore di Monteveglio (IT)
(74) Representative: Casadei, Barbara
(86) International application number: PCT/IB2013/060059
(87) International publication number: WO 2014/076627

(56) References cited:
- EP-A1- 0 608 823
- EP-A1- 0 608 824
- EP-A1- 0 769 453
- EP-A1- 0 960 818
- EP-A1- 1 357 066
- WO-A2-2009/127418
- DE-A1- 10 138 943
- DE-A1- 19 906 438
- DE-A1-102006 020 518
- GB-A- 2 191 166

## Description

### Technical field

This invention relates to a wrapping machine for confectionery products.

Specifically, this invention can be applied to the wrapping of confectionery products such as, for instance, sweets, chocolates, and the like, to which this description will hereinafter refer but without thereby limiting the scope of the invention.

### Background art

There are prior art wrapping machines for wrapping confectionery products comprising a transfer drum for transferring a series of products to a wrapping device.

Such devices are for example disclosed in EP 0 608 823 A1, DE 10 2006 020 518 A1 and GB 2 191 166 A.

In general, the wrapping device comprises a first and a second folding roller which are at a tangent to one another at a transfer station for transferring the products where the products pass from the first to the second folding roller.

In particular, the first folding roller couples a sheet of wrapping material around the respective product and the second folding roller wraps the sheet of wrapping material according to a tubular wrapper configuration which is subsequently folded according to a predetermined wrapping shape.

In prior art wrapping machines the type of products to be wrapped greatly influences the machine architecture, since the products to be wrapped must be fed to the wrapping device with a predetermined orientation.

Consequently, switching from wrapping confectionery products which are spherical or have an elongate parallelepiped shape, whose wrapping shape is usually of the "double-twist" type, to wrapping products which are frustoconical, whose wrapping shape is usually of the single "top-twist" type, requires machine reconfiguration, substituting at least one of the two folding rollers of the wrapping device.

Substitution of a folding roller is a rather onerous operation, since lengthy downtimes are involved, which are converted into costs for lost production, the use of dedicated equipment, given the considerable weight of each folding roller, and the use of qualified personnel suitable for operating on the machine.

### Disclosure of the invention

The aim of this invention is to provide a wrapping machine for confectionery products which overcomes the above-mentioned disadvantages, that is to say, which allows correct orientation of the confectionery products to be wrapped upstream of the wrapping device in such a way that, if the type of product is changed, there is no need to substitute any of the folding rollers on the machine.

In order to obtain good quality final wrapping of the products, it is also necessary to always guarantee perfect mutual positioning of every single product and the related wrapping material.

The technical purpose specified and the aims indicated are achieved by a machine and a method having the features described in the respective independent claims 1 and 8.

### Brief description of drawings

Further features and advantages of this invention are more apparent in the description below, with reference to a preferred, non-limiting embodiment of a machine as illustrated in the accompanying drawings, in which:
- Figure 1 is a schematic front view of the machine according to the invention;
- Figure 2 is an enlarged perspective view of a first detail of the machine of Figure 1;
- Figure 3 is a side view of the first detail shown in Figure 2;
- Figure 4 is an enlarged perspective view of the first detail shown in Figure 2 in a further operating step of it;
- Figure 5 is an enlarged perspective view of a second detail of the machine of Figure 1;
- Figure 6 is a plan view of the second detail shown in Figure 5.

### Detailed description of preferred embodiments of the invention

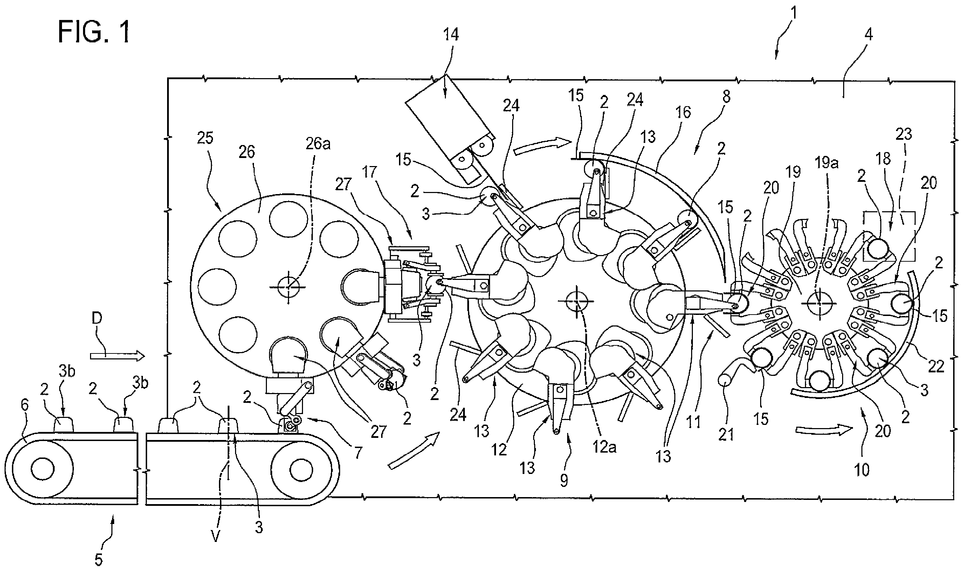

With reference to Figure 1, the numeral 1 denotes in its entirety a wrapping machine for confectionery products 2.

In the embodiment described, reference will be made to confectionery products 2 which mainly extend along a vertical axis V.

In particular, the products 2 have a substantially frustoconical shape, having a flat resting base 3.

The products 2 comprise a top end 3b, opposite to the resting base 3.

The frustoconical shape of the confectionery products 2 makes them particularly suitable for being wrapped with a type of wrapping shape called "boero", that is to say, a wrapping shape which has a single top "twist", positioned along the vertical axis V on the opposite side to the resting base 3 of the product 2.

The machine 1 comprises a vertical wall 4 which supports a plurality of conveyor rollers 26, 12, 19 for conveying the products 2 with their respective axes of rotation 26a, 12a, 19a horizontal, perpendicular to the wall 4.

The machine 1 comprises a feed device 5 for feeding a series of confectionery products 2 in a predetermined direction D of feed.

In particular, the series of confectionery products 2 is an orderly series. Alternatively, the series may be a continuous row without a gap between one product and the next, or a random series.

Furthermore, the series may be a random series of products which are gripped after being identified by suitable sensors.

The feed device 5 comprises a conveyor belt 6 on which the confectionery products 2 are fed with their vertical axis V orthogonal to the direction D of feed of the conveyor belt 6.

More precisely, the products 2 are conveyed with their resting base 3 in contact with the belt 6.

The feed device 5 conveys the orderly series of products 2 towards a feed station 7, where the products 2 are picked up for wrapping.

The machine 1 comprises a wrapping device 8 which comprises a first and a second wrapping drum 9 and 10 which are substantially at a tangent to one another at a transfer station 11 for transferring the products 2, in such a way that the second drum 10 receives the products 2 from the first drum 9.

The wrapping device 8 comprises a loading station 17, where products are fed to the first drum 9, and an outfeed station 18, where the second drum 10 unloads the wrapped products 2.

The first drum 9 comprises the first conveyor roller 12 which acts as the first folding roller 12 comprising a plurality of first jaw elements 13.

The first jaw elements 13 are evenly distributed along the cylindrical outer surface of the first roller 12, parallel with the vertical wall 4.

The second wrapping drum 10 comprises the second conveyor roller 19 which acts as the second folding roller 19 comprising a plurality of second jaw elements 20.

The second jaw elements 20 are evenly distributed along the cylindrical outer surface of the second folding roller 19, parallel with the vertical wall 4.

In the embodiment illustrated in Figure 1, the first folding roller 12 rotates clockwise and the second folding roller 19 rotates anti-clockwise.

The first wrapping drum 9 comprises a feed device 14 for feeding sheets of wrapping material 15, facing the cylindrical outer periphery of the first folding roller 12.

Positioned downstream of the feed device 14, according to the direction of rotation of the first folding roller 12, there is a fixed curved panel 16 also facing the cylindrical outer periphery of the first roller 12.

The feed device 14 and the fixed curved panel 16 are both positioned between the loading station 17 for loading the first wrapping drum 9 and the transfer station 11.

A first mobile folder 21 and a fixed folder 22, positioned downstream of the mobile folder 21, with reference to the direction of rotation of the second folding roller 19, are positioned facing the cylindrical outer surface of the second folding roller 19.

Positioned at the outfeed of the fixed folder 22, there is a second folder 23 designed to make the twist characteristic of the "top twist" wrapping shape, completing the wrapping of the product 2.

In use, to centre the products 2 to be wrapped on the respective sheet of wrapping material 15 and to guarantee successful production of the wrapping shape, the products 2 must be fed to the wrapping device 8 with their vertical axis V positioned perpendicularly to the vertical wall 4, along a direction parallel with the axes of rotation 12a and 19a of the first and second folding rollers 12 and 19.

In other words, the products 2 are fed to the first wrapping drum 9 with their resting base 3 parallel with and facing the vertical wall 4.

The first folding roller 12 receives the products 2 at the loading station 17 by means of the first jaw elements 13.

Each first jaw element 13 grips a respective product 2 at the resting base 3 and the free end 3b opposite to the base 3.

At this point, during rotation of the first folding roller 12, the first jaw elements 13, holding the respective product 2, pick up, by means of a further gripper 24, a sheet of wrapping material 15 from the feed device 14, coupling it with the product 2.

A first portion of the sheet 15 is clamped against the product 2 and a second portion is left projecting radially outwards from the first folding roller 12.

Then, after the rotation of the first roller 12, the second portion of the sheet of wrapping material 15 is folded into an L shape by interference with the fixed curved panel 16.

At this point, once the products 2 come out of the fixed curved panel 16, the second folding roller 19 picks up the products 2 with the respective sheet of wrapping material 15 using the second jaw elements 20.

Each second jaw element 20 grips a respective product 2 with the respective sheet of wrapping material 15, folding the sheet 15 in a U shape around the product 2, with two side flaps projecting outwards from the second folding roller 19.

During the rotation of the second folding roller 19, the products 2 are fed to the first mobile folder 21 which folds down one projecting flap of the sheet of wrapping material 15, positioned upstream of the other projecting flap, relative to the direction of rotation of the second roller 19.

Then, the product 2 is fed towards the fixed folder 22 which folds down the remaining projecting flap, forming a tubular wrapper around the product 2. Moreover, the flaps projecting beyond the base 3 are folded onto the base 3, the base itself acting as a contact element for the folders 21 and 22. The tubular wrapper has one open free end, opposite to the resting base 3, where the wrapper closing bow is created by the second folder 23, in the case of a "top twist" type of wrapper.

At this point, at the outfeed station 18, the second folding roller 19 releases the products 2 which have been wrapped according to the required wrapping shape.

The machine 1 comprises a transfer drum 25 for transferring the products 2 from the feed station 7 to the loading station 17 of the wrapping device 8.

The transfer drum 25 comprises the conveyor roller 26 which acts as a transfer roller 26 rotating about its own horizontal axis 26a of rotation. The transfer roller 26 comprises a plurality of pickup units 27, evenly distributed along the outer circumference of the transfer roller 26.

The pickup units 27 extend outwards from the outer cylindrical surface of the transfer roller 26 and are positioned facing an end surface of the roller 26, on the opposite side to the vertical wall 4.

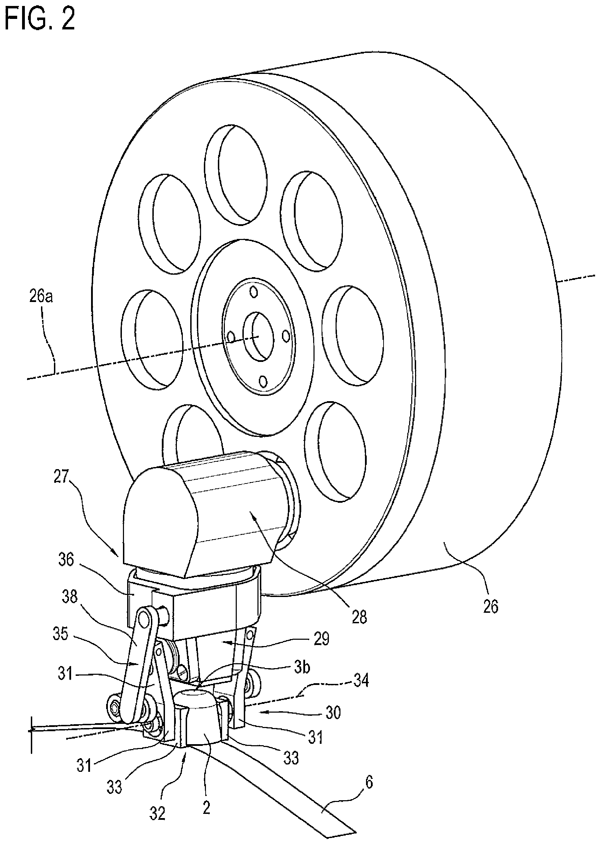

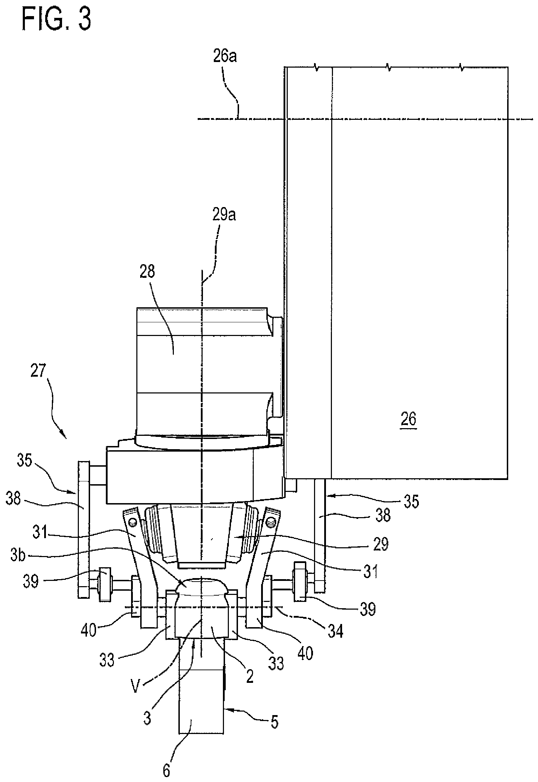

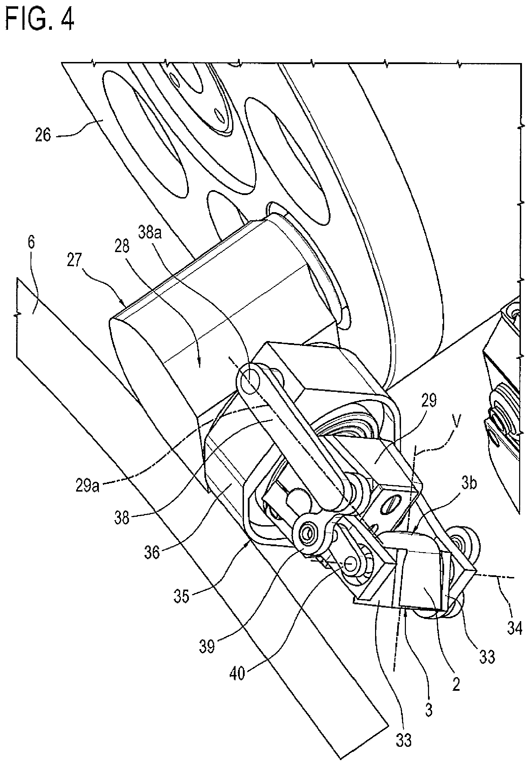

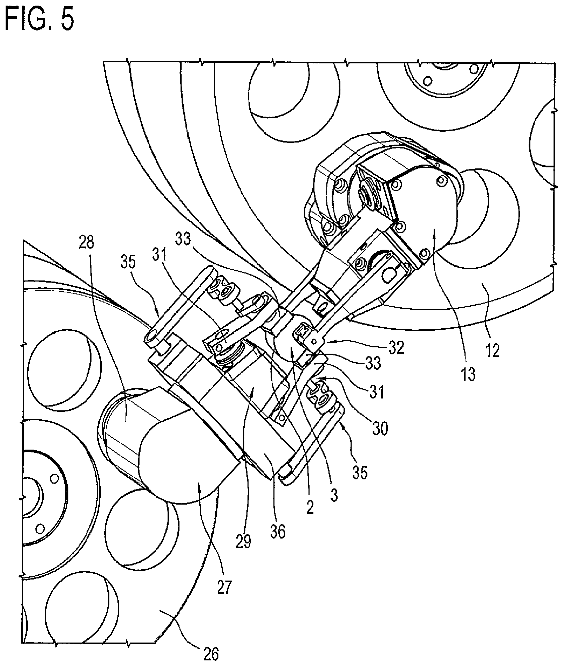

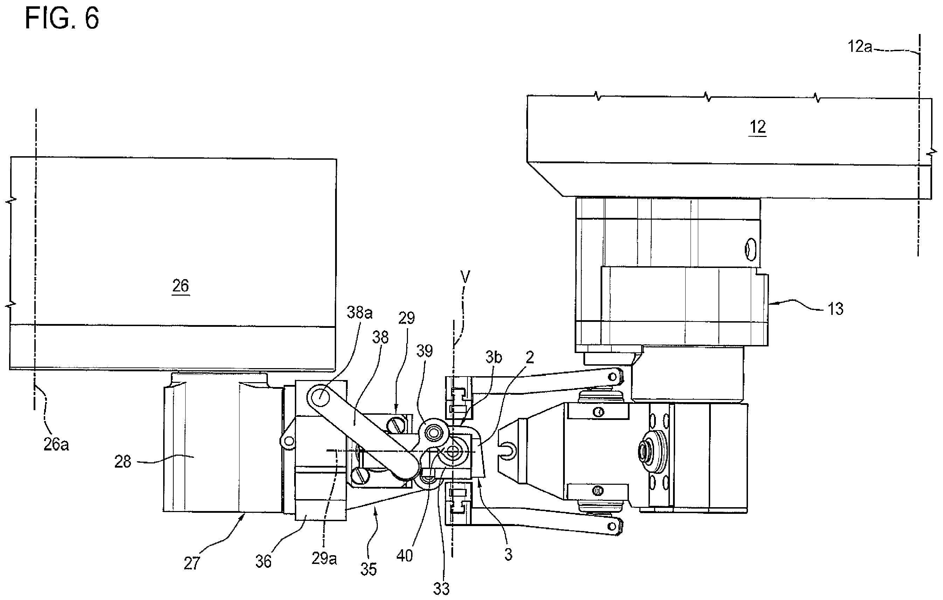

As schematically illustrated in Figures 2 to 6, each pickup unit 27 comprises a head body 28 and a main body 29 supported by the head body 28.

The head body 28 is connected to the transfer roller 26 and rotates together with it.

The main body 29 of each pickup unit 27 is rotatably connected to the respective head body 28.

In particular, the main body 29 rotates about its own axis of rotation 29a. The axis of rotation 29a is transversal to the axis 26a of rotation of the transfer roller 26 and is positioned along a direction which is radial relative to the roller 26.

Cam transmission means, not illustrated, drive the rotation of the main body 29 about its own axis 29a, during the rotation of the transfer roller 26. More precisely, during the rotation of the transfer roller 26 from the feed station 7 to the loading station 17 the main body 29 of each pickup unit 27 rotates 90° about its own axis 29a.

The main body 29 of each pickup unit 27 comprises a pair 30 of grippers 31 able to move towards and away from one another.

Each pair 30 of grippers 31 comprises at the free end a respective pair 32 of grabber elements 33 for gripping the products 2.

More precisely, each gripper 31 is equipped with its own grabber element 33.

Said grabber elements 33 are in the form of plates suitably shaped to guarantee an effective hold on the products 2.

The grabber elements 33 of each pair 30 of grippers 31 are free to rotate about an axis of rotation 34.

The axis of rotation 34 is orthogonal to the axis of rotation 29a of the main body 29.

Therefore, each pickup unit 27, as well as rotating about the axis 26a of the transfer roller 26, has a first and a second axis of rotation 29a and 34. The first axis of rotation 29a is the axis of rotation of the main body 29 and the second axis of rotation 34 is the axis of rotation of the grabber elements 33.

The first axis of rotation 29a is transversal to the axis of rotation 26a of the transfer roller 26 and extends along a direction which is radial relative to the transfer roller 26.

The second axis 34 of rotation is orthogonal to the first axis of rotation 29a.

During the rotation of the transfer roller 26, from the feed station 7 to the loading station 17, the rotation of the main body 29 about the first axis of rotation 29a and the rotation of the pair 32 of grabber elements 33 about the second axis of rotation 34 occur simultaneously.

More precisely, the rotation of the main body 29 about the first axis of rotation 29a drives the rotation of the pair 32 of grabber elements 33 about the second axis of rotation 34.

In particular, from the feed station 7 to the loading station 17, the pair 32 of grabber elements 33 rotate 90° about the second axis of rotation 34. Each pickup unit 27 comprises crank means 35 associated with each pair 32 of grabber elements 33.

During the rotation of the main body 29 about the first axis of rotation 29a, the crank means 35 drive the rotation of the pair 32 of grabber elements 33 about the second axis of rotation 34.

Each pickup unit 27 comprises a single supporting element 36 for the crank means 35 which is connected to the main body 29.

The supporting element 36 is rigidly connected to the main body 29 in such a way that the rotation of the main body 29 about its own axis 29a drives the rotation of the supporting element 36.

The crank means 35 comprise a series of arms 38, 39 and 40, hinged to one another, which connect the supporting element 36 to a respective grabber element 33.

In particular, the crank means 35 comprise a first arm 38, connected to the supporting element 36, a second arm 39, connected to the first arm 38, and a third arm 40, connected to the second arm 39 and to the respective grabber element 33.

The series of arms 38, 39 and 40 forms an articulated system with a driver, the first arm 38, and a follower, the third arm 39.

The simultaneous rotation of the products 2, conveyed by the respective pickup unit 27, about the first and the second axes of rotation 29a and 34, allows the products 2 to be oriented at the loading station 17 of the wrapping device 8, in such a way that the resting base 3 is facing the vertical wall 4 and the vertical axis V is parallel with the axis of rotation 26a of the transfer roller 26.

In use, at the feed station 7, the pair 30 of grippers 31 and the respective grabber elements 33 are positioned according to a direction transversal to the direction D of feed of the orderly series of products 2.

The grippers 31 move towards one another until the respective grabber elements 33 grip the respective product 2.

In particular, the grabber elements 33 engage the product 2 at its side surface, leaving the resting base 3 and the head end 3b opposite to it free. It should be noticed that, at the feed station 7, the vertical axis V of the product 2 is positioned along a direction parallel with the first axis of rotation 29a of the main body 29 of the respective pickup unit 27.

Once the pickup unit 27 has received the respective product 2, the transfer roller 26 conveys it from the feed station 7 to the loading station 17. During the rotation of the transfer roller 26, which in the embodiment illustrated is anticlockwise, the main body 29 is driven to rotate about its own axis 29a.

In particular, the main body 29 of each pickup unit 27 rotates about the first axis 29a in a clockwise direction.

At this point, the supporting element 36, securely connected to the main body 29, is also driven to rotate about the first axis 29a.

In turn, the supporting element 36 drives the rotation of one of the ends 38a of the first arms 38 of the crank means 35.

The first arms 38 move the respective second arms 39 which, in turn, drive the respective third arms 40 which, oscillating about the second axis 34 of rotation, cause the respective grabber elements 33 to rotate about the second axis 34.

In particular, the grabber elements 33 rotate about the second axis of rotation 34 in a clockwise direction.

The products 2 held by the grippers 31 of the respective pickup unit 27 therefore rotate relative to the axis of rotation 26a of the transfer roller 26, since they are conveyed from the feed station 7 to the loading station 17, and relative to the first and the second axes of rotation 29a and 34 of each pickup unit 27.

Once each pickup unit 27 reaches the loading station 17 of the wrapping device 8, the main body 29 has rotated 90° about the first axis of rotation 29a and the pair 32 of grabber elements 33 has rotated 90° about the second axis of rotation 34, compared with the starting position they adopted at the feed station 7.

After the simultaneous 90° rotation about the first and second axes 29a and 34, the products 2 are positioned with their vertical axis V orthogonal both to the first and the second axes of rotation 29a and 34, according to a direction parallel with the axis 26a of rotation of the transfer roller 26.

That configuration allows the wrapping device 8 to pick up the products 2 by gripping them at the resting base 3 and the head end 3b opposite to it, guaranteeing optimum centring of the product 2 with the respective sheet of wrapping material 15.

Advantageously, since the pickup units 27 of the transfer drum 25 correctly orient the products 2 to be wrapped by means of the rotation about the first and the second axes 29a and 34, the machine 1 according to this invention is able to wrap confectionery products 2 which have a frustoconical, or spherical or parallelepiped shape.

In fact, if the product 2 has a spherical or parallelepiped shape, the simultaneous rotation about the first and second axes 29a and 34 allows the product 2 to be correctly oriented.

## Claims

1. A wrapping machine for food products comprising a station (7) for feeding a series of products (2) which are fed in a predetermined direction (D);
the wrapping machine comprising
a transfer drum (25) for transferring the products (2) from the feed station (7) to a loading station (17) of a device (8) for wrapping the products (2);
the transfer drum (25) comprising a transfer roller (26) rotating about its own axis (26a) of rotation which is transversal to the direction (D) of feed of the orderly series of products (2);
the transfer roller (26) comprising a plurality of pickup units (27) evenly distributed along the outer circumference of the transfer roller (26); each pickup unit (27) comprising a head body (28) and a main body (29) supported by the head body (28);
wherein the wrapping machine is configured such that the products (2) are conveyed from the feed station (7) to the loading station (17) by the respective pickup unit (27), wherein each of the products rotates about the axis (26a) of rotation of the transfer roller (26) and simultaneously about first and second axes of rotation (29a, 34) of the pickup unit (27);
the main body (29) of each pickup unit (27) comprising a pair (30) of grippers (31), able to move towards and away from one another, comprising at the free end a respective pair (32) of grabber elements (33) for gripping the products (2); the head body (28) being connected to the transfer roller (26) and rotating together with it;
the main body (29) of each pickup unit (27) being rotatably connected to the respective head body (28) for rotation with respect to the head body (28) about the first axis of rotation (29a);
the first axis of rotation (29a) being transversal to the axis (26a) of rotation of the transfer roller (26);
**characterised in that**
the grabber elements (33) of each pair (30) of grippers (31) are free to rotate about the second axis of rotation (34) relative to the grippers (31);
the second axis of rotation (34) being orthogonal to the first axis of rotation (29a) of the main body (29); and
the first axis of rotation (29a) being positioned along a direction which is radial relative to the transfer roller (26);
wherein the wrapping machine is configured such that during the rotation of the transfer roller (26), from the feed station (7) to the loading station (17), the rotation of the main body (29) about the first axis of rotation (29a) and the rotation of the pair (32) of grabber elements (33) about the second axis of rotation (34) occur simultaneously.

2. The machine according to claim 1, **characterised in that** from the feed station (7) to the loading station (17) each pickup unit (27) rotates about the axis (26a) of rotation of the transfer roller (26) and, simultaneously, the respective main body (29) rotates through 90° about the first axis (29a) of rotation and the grabber elements (33) rotate through 90° about the second axis (34) of rotation.

3. The machine according to claim 2, **characterised in that** the rotation of the main body (29) about the first axis (29a) of rotation drives the rotation of the pair (32) of grabber elements (33) about the second axis (34) of rotation.

4. The machine according to any one of the claims from 1 to 3, **characterised in that** each pickup unit (27) comprises crank means (35) which drive the rotation of the pair (32) of grabber elements (33) about the second axis (34) of rotation; the crank means (35) connecting each grabber element (33) of the pair (32) to the main body (29).

5. The machine according to claim 4, **characterised in that** each pickup unit (27) comprises a single supporting element (36) for the crank means (35) which is connected to the main body (29); the crank means (35) comprising a series of arms (38, 39, 40) hinged to one another and connecting the supporting element (36) to a respective grabber element (33).

6. The machine according to claim 5, **characterised in that** the crank means (35) comprise a first arm (38), connected to the supporting element (36), a second arm (39), connected to the first arm (38), and a third arm (40), connected to the second arm (39) and to the respective grabber element (33); the series of arms (38, 39, 40) forming an articulated system with a driver, the first arm (38), and a follower, the third arm (40); the rotation of the main body (29) about the first axis (29a) of rotation moving the first arm (38) which, by means of the action of the second and third arms (39, 40) which are hinged to each other, drives the rotation of the grabber elements (33) about the second axis (34) of rotation.

7. A method for wrapping food products by using a wrapping machine according to claim 1,
comprising the steps of feeding a series of products (2) in a predetermined direction (D) towards a feed station (7); transferring the products (2) from the feed station (7) to a loading station (17) of a wrapping device (8) wherein the products (2) are conveyed from the feed station (7) to the loading station (17) by the respective pickup unit (27), wherein the products (2) rotate about the axis (26a) of rotation of the transfer roller (26) and simultaneously about the first and the second axis of rotation (29a, 34) of the pickup unit (27).

8. The method for wrapping food products according to claim 7, **characterised in that** it comprises rotating the products (2) simultaneously through 90° about the first axis (29a) of rotation of the main body (29) and through 90° about the second axis (34) of rotation of the grabber elements (33), during product transfer from the feed station (7) to the loading station (17).

## Patentansprüche

1. Einwickelmaschine für Nahrungsmittelprodukte, umfassend eine Station (7) zum Zuführen einer Reihe von Produkten (2), die in einer vorgegebenen Richtung (D) zugeführt werden,
wobei die Einwickelmaschine umfasst:
eine Übergabetrommel (25) zum Übergeben der Produkte (2) von der Zuführungsstation (7) an eine Ladestation (17) einer Vorrichtung (8) zum Einwickeln der Produkte (2), wobei die Übergabetrommel (25) eine Übergabewalze (26) umfasst, die sich um ihre eigene Rotationsachse (26a) dreht, die quer zur Zuführungsrichtung (D) der geordneten Reihe von Produkten (2) verläuft,
wobei die Übergabewalze (26) eine Vielzahl an Aufnahmeeinheiten (27) umfasst, die gleichmäßig entlang des äußeren Umfangs der Übergabewalze (26) verteilt sind, wobei eine jede Aufnahmeeinheit (27) einen Kopfkörper (28) und einen Hauptkörper (29) umfasst, gestützt vom Kopfkörper (28),
wobei die Einwickelmaschine so ausgelegt ist, dass die Produkte (2) von der Zuführungsstation (7) zur Ladestation (17) durch die jeweilige Aufnahmeeinheit (27) gefördert werden, wobei sich ein jedes der Produkte um die Rotationsachse (26a) der Übergabewalze (26) und gleichzeitig um erste und zweite Rotationsachsen (29a, 34) der Aufnahmeeinheit (27) dreht,
wobei der Hauptkörper (29) einer jeden Aufnahmeeinheit (27) ein Paar (30) Greifer (31) umfasst, die in der Lage sind, sich hinführend zueinander und wegführend voneinander zu bewegen, umfassend am freien Ende ein jeweiliges Paar (32) Greiferelemente (33) zum Greifen der Produkte (2),
wobei der Kopfkörper (28) mit der Übergabewalze (26) verbunden ist und sich zusammen mit dieser dreht,
wobei der Hauptkörper (29) einer jeden Aufnahmeeinheit (27) drehbar mit dem jeweiligen Kopfkörper (28) verbunden ist, um sich zum Kopfkörper (28) um die erste Rotationsachse (29a) zu drehen,
wobei die erste Rotationsachse (29a) quer zur Rotationsachse (26a) der Übergabewalze (26) angeordnet ist,
**dadurch gekennzeichnet, dass**
die Greiferelemente (33) eines jeden Paars (30) Greifer (31) frei sind, sich um die zweite Rotationsachse (34) relativ zu den Greifern (31) zu drehen,
wobei die zweite Rotationsachse (34) rechtwinklig zur ersten Rotationsachse (29a) des Hauptkörpers (29) angeordnet ist, und
die erste Rotationsachse (29a) entlang einer Richtung positioniert ist, die radial relativ zur Übergabewalze (26) verläuft,
wobei die Einwickelmaschine so ausgelegt ist, dass die Drehung des Hauptkörpers (29) um die erste Rotationsachse (29a) und die Drehung des Paars (32) Greiferelemente (33) um die zweite Rotationsachse (34) während der Drehung der Übergabewalze (26) von der Zuführungsstation (7) zur Ladestation (17) gleichzeitig stattfinden.

2. Maschine nach Anspruch 1, **dadurch gekennzeichnet, dass** sich eine jede Aufnahmeeinheit (27) von der Zuführungsstation (7) zur Ladestation (17) um die Rotationsachse (26a) der Übergabewalze (26) dreht und dass sich der jeweilige Hauptkörper (29) gleichzeitig um 90° um die erste Rotationsachse (29a) dreht und dass sich die Greiferelemente (33) um 90° um die zweite Rotationsachse (34) drehen.

3. Maschine nach Anspruch 2, **dadurch gekennzeichnet, dass** die Drehung des Hauptkörpers (29) um die erste Rotationsachse (29a) die Drehung des Paars (32) Greiferelemente (33) um die zweite Rotationsachse (34) bewirkt.

4. Maschine nach einem der Ansprüche 1 bis 3, **dadurch gekennzeichnet, dass** eine jede Aufnahmeeinheit (27) Kurbelwellenmittel (35) umfasst, die die Drehung des Paars (32) Greiferelemente (33) um die zweite Rotationsachse (34) bewirken, wobei die Kurbelwellenmittel (35) ein jedes Greiferelement (33) des Paars (32) mit dem Hauptkörper (29) verbinden.

5. Maschine nach Anspruch 4, **dadurch gekennzeichnet, dass** eine jede Aufnahmeeinheit (27) ein einzelnes Stützelement (36) für die Kurbelwellenmittel (35) umfasst, das mit dem Hauptkörper (29) verbunden ist, wobei die Kurbelwellenmittel (35) eine Reihe an Armen (38, 39, 40) umfassen, die gelenkig miteinander verbunden sind und das Stützelement (36) mit einem jeweiligen Greiferelement (33) verbinden.

6. Maschine nach Anspruch 5, **dadurch gekennzeichnet, dass** die Kurbelwellenmittel (35) einen ersten Arm (38) umfassen, der mit dem Stützelement (36) verbunden ist, einen zweiten Arm (39), der mit dem ersten Arm (38) verbunden ist, und einen dritten Arm (40), der mit dem zweiten Arm (39) und dem jeweiligen Greiferelement (33) verbunden ist, wobei die Reihe an Armen (38, 39, 40) ein strukturiertes System mit einem Antrieb, dem ersten Arm (38), und einem Nachläufer, dem dritten Arm (40), bildet, wobei die Drehung des Hauptkörpers (29) um die erste Rotationsachse (29a) den ersten Arm (38) bewegt, der durch die Wirkung des zweiten und dritten Arms (39, 40), die gelenkig miteinander verbunden sind, die Drehung der Greiferelemente (33) um die zweite Rotationsachse (34) bewirkt.

7. Verfahren zum Einwickeln von Nahrungsmittelprodukten durch die Nutzung einer Einwickelmaschine nach Anspruch 1,
umfassend die Schritte zum Zuführen einer Reihe von Produkten (2) in einer vorgegebenen Richtung (D) zur Zuführungsstation (7), zum Übergeben der Produkte (2) von der Zuführungsstation (7) an eine Ladestation (17) einer Einwickelvorrichtung (8),
wobei die Produkte (2) von der Zuführungsstation (7) zur Ladestation (17) durch die jeweilige Aufnahmeeinheit (27) gefördert werden, wobei sich die Produkte (2) um die Rotationsachse (26a) der Übergabewalze (26) und gleichzeitig um die erste und die zweite Rotationsachse (29a, 34) der Aufnahmeeinheit (27) drehen.

8. Verfahren zum Einwickeln von Nahrungsmittelprodukten nach Anspruch 7, **dadurch gekennzeichnet, dass** es das Drehen der Produkte (2) gleichzeitig um 90° um die erste Rotationsachse (29a) des Hauptkörpers (29) und um 90° um die zweite Rotationsachse (34) der Greiferelemente (33) während der Produktübergabe von der Zuführungsstation (7) zur Ladestation (17) umfasst.

## Revendications

1. Machine à envelopper pour produits alimentaires, comprenant un poste (7) servant à alimenter une série de produits (2) étant alimentés dans une direction prédéfinie (D) ;
la machine à envelopper comprenant :
un tambour de transfert (25) servant à transférer les produits (2) du poste d'alimentation (7) à un poste de chargement (17) d'un dispositif (8) servant à envelopper les produits (2) ;
le tambour de transfert (25) comprenant un rouleau de transfert (26) tournant autour de son propre axe (26a) de rotation étant transversal à la direction (D) d'alimentation de la série de produits ordonnés (2) ;
le rouleau de transfert (26) comprenant une pluralité d'unités de préhension (27) uniformément réparties le long de la circonférence extérieur du rouleau de transfert (26) ; chaque unité de préhension (27) comprenant un corps de tête (28) et un corps principal (29) supporté par le corps de tête (28) ;
dans laquelle la machine à envelopper est configurée de manière à ce que les produits (2) soient convoyés du poste d'alimentation (7) au poste de chargement (17) par l'unité de préhension (27) respective, dans laquelle chacun des produits tourne autour de l'axe (26a) de rotation du rouleau de transfert (26) et simultanément autour des premier et second axes de rotation (29a, 34) de l'unité de préhension (27) ;
le corps principal (29) de chaque unité de préhension (27) comprenant une paire (30) de préhenseurs (31), pouvant s'éloigner et se rapprocher réciproquement, comprenant en correspondance de l'extrémité libre une paire (32) respective d'éléments de saisie (33) servant à saisir les produits (2) ;
le corps de tête (28) étant relié au rouleau de transfert (26) et tournant avec celui-ci ;
le corps principal (29) de chaque unité de préhension (27) étant relié de façon rotative au corps de tête (28) respectif pour la rotation par rapport au corps de tête (28) autour du premier axe de rotation (29a) ;
le premier axe de rotation (29a) étant transversal à l'axe (26a) de rotation du rouleau de transfert (26) ;
**caractérisée en ce que**
les éléments de saisie (33) de chaque paire (30) de préhenseurs (31) sont libres de tourner autour du second axe de rotation (34) par rapport aux préhenseurs (31) ;
le second axe de rotation (34) étant orthogonal au premier axe de rotation (29a) du corps principal (29) ; et
le premier axe de rotation (29a) étant positionné le long d'une direction qui est radiale par rapport au rouleau de transfert (26) ;
dans laquelle la machine à envelopper est configurée de telle sorte que pendant la rotation du rouleau de transfert (26), du poste d'alimentation (7) au poste de chargement (17), la rotation du corps principal (29) autour du premier axe de rotation (29a) et la rotation de la paire (32) d'éléments de saisie (33) autour du second axe de rotation (34) se produisent simultanément.

2. Machine selon la revendication 1, **caractérisée en ce que** du poste d'alimentation (7) au poste de chargement (17) chaque unité de préhension (27) tourne autour de l'axe (26a) de rotation du rouleau de transfert (26) et, simultanément, le corps principal (29) respectif tourne sur 90° autour du premier axe (29a) de rotation et les éléments de saisie (33) tournent sur 90° autour du second axe (34) de rotation.

3. Machine selon la revendication 2, **caractérisée en ce que** la rotation du corps principal (29) autour du premier axe (29a) de rotation entraîne la rotation de la paire (32) d'éléments de saisie (33) autour du second axe (34) de rotation.

4. Machine selon l'une quelconque des revendications de 1 à 3, **caractérisée en ce que** chaque unité de préhension (27) comprend des moyens à bielle (35) entraînant la rotation de la paire (32) d'éléments de saisie (33) autour du second axe (34) de rotation ; les moyens à bielle (35) reliant chaque élément de saisie (33) de la paire (32) au corps principal (29).

5. Machine selon la revendication 4, **caractérisée en ce que** chaque unité de préhension (27) comprend un élément de support (36) individuel pour les moyens à bielle (35) étant relié au corps principal (29) ; les moyens à bielle (35) comprenant une série de bras (38, 39, 40) montés articulés les uns aux autres et reliant l'élément de support (36) à un élément de saisie (33) respectif.

6. Machine selon la revendication 5, **caractérisée en ce que** les moyens à bielle (35) comprennent un premier bras (38) relié à l'élément de support (36), un second bras (39) relié au premier bras (38) et un troisième bras (40) relié au second bras (39) et à l'élément de saisie (33) respectif ; la série de bras (38, 39, 40) formant un système articulé avec un moteur d'entraînement, le premier bras (38), et un prolongateur, le troisième bras (40) ; la rotation du corps principal (29) autour du premier axe (29a) de rotation déplaçant le premier bras (38) qui, au moyen de l'action des second et troisième bras (39, 40) étant montés articulés l'un à l'autre, entraîne la rotation des éléments de saisie (33) autour du second axe (34) de rotation.

7. Procédé pour envelopper des produits alimentaires en utilisant une machine à envelopper selon la revendication 1,
comprenant les étapes consistant à alimenter une série de produits (2) dans une direction prédéfinie (D) vers un poste d'alimentation (7) ; transférer les produits (2) du poste d'alimentation (7) à un poste de chargement (17) d'un dispositif à envelopper (8),
dans lequel les produits (2) sont convoyés du poste d'alimentation (7) au poste de chargement (17) par l'unité de préhension (27) respective, dans lequel les produits (2) tournent autour de l'axe (26a) de rotation du rouleau de transfert (26) et simultanément autour des premier et second axe de rotation (29a, 34) de l'unité de préhension (27).

8. Procédé pour envelopper des produits alimentaires selon la revendication 7, **caractérisé en ce qu'**il comprend la rotation des produits (2) simultanément sur 90° autour du premier axe (29a) de rotation du corps principal (29) et sur 90° autour du second axe (34) de rotation des éléments de saisie (33), lors du transfert du produit du poste d'alimentation (7) au poste de chargement (17).
